# EUROPÄISCHE PATENTANMELDUNG

(11) **EP 2 420 714 A2**
(43) Veröffentlichungstag der Anmeldung: **22.02.2012**
(21) Anmeldenummer: 11177821.3
(22) Anmeldetag: 17.08.2011
(51) Int. Cl.: F16L 25/00, F24J 2/46

(54) **Anschlussvorrichtung zum Anschließen eines Wellrohrs und entsprechende Anschlussverbindung**

(30) Priorität: 19.08.2010 DE 202010011576 U
(71) Anmelder: Witzenmann GmbH, 75175 Pforzheim (DE)
(72) Erfinder: Abraham, Cristoph, 75180 Pforzheim (DE); Gehring, Matthias, 75334 Straubenhardt (DE); Gloß, Andreas, 75223 Niefern-Öschelbronn (DE); Klein, Tobias, 76137 Karlsruhe (DE)
(74) Vertreter: Lemcke, Brommer & Partner

(57) **Zusammenfassung**

Vorgeschlagen wird eine Anschlussvorrichtung (1) zum Anschließen eines Wellrohrs (2), insbesondere an einen Solarkollektor, welche Anschlussvorrichtung (1) umfasst:
- ein erstes Schraubteil (1a) mit einem ersten Gewindeabschnitt (1aa) und mit einem axialen Durchbruch (1ab), welcher Durchbruch (1ab) zum Aufnehmen und Weiterleiten eines in dem anzuschließenden Wellrohr (2) geführten Fluids ausgebildet ist;
- ein zweites Schraubteil (1 b) mit einem zweiten Gewindeabschnitt (1ba), welcher zu dem ersten Gewindeabschnitt (1aa) komplementär ausgebildet ist, sodass das erste Schraubteil (1a) und das zweite Schraubteil (1a) schraubverbindbar sind, und mit einem axialen Durchbruch (1bb), welcher Durchbruch (1bb) zum Durchführen eines anzuschließenden Wellrohrs (2) ausgebildet ist; und
- einen Druckring (1 c), der zwischen dem ersten Schraubteil (1a) und dem zweiten Schraubteil (1 b) angeordnet oder anzuordnen ist und der einen Durchbruch aufweist, welcher Durchbruch zum Durchführen eines anzuschließenden Wellrohrs (2) ausgebildet ist;
wobei
- an dem einen, ersten oder zweiten Schraubteil (1 b), vorzugsweise an dessen dem anderen, ersten oder zweiten Schraubteil (1 b) zugewandter Stirnseite, eine erste Schiebestruktur (1bc) zum axialen Einwirken auf den Druckring (1c) angeordnet ist, durch welche erste Schiebestruktur (1bc) der Druckring (1 c) mit einer im Wesentlichen axial wirksamen Kraft beaufschlagbar ist;
- an dem anderen, ersten (1a) oder zweiten Schraubteil eine sich zumindest abschnittweise unter einem Winkel schräg zur Längsachse (L) der Anschlussvorrichtung (1) erstreckende Drückstruktur (1ac") angeordnet ist, welche Drückstruktur (1ac") zum Einwirken auf eine Außenkontur (1cd) des Druckrings (1c) ausgebildet ist;
- der Druckring (1c) eine zur der Drückstruktur (1ac") zumindest abschnittweise komplementäre Außenkontur (1 cd) und weiterhin eine gegenüber dem restlichen Druckringkörper radial nach innen vorspringende Anlagestruktur (1ca) aufweist, welche beim Anziehen der Schraubverbindung zwischen erstem (1a) und zweitem Schraubteil (1 b) durch Einwirkung der ersten Schiebestruktur (1bc) und/oder der Drückstruktur (1ac") in eine metallisch dichtende Anlage an dem anzuschließenden Wellrohr (2) bringbar ist.

## Beschreibung

Die Erfindung betrifft mit dem Anspruch 1 eine Anschlussverbindung zum Anschließen eines Wellrohrs, insbesondere an einen Solarkollektor.

Außerdem umfasst die Erfindung gemäß dem Anspruch 12 eine Anschlussverbindung zwischen einem Wellrohr und der erfindungsgemäßen Anschlussvorrichtung.

Eine Anschlussvorrichtung und Anschlussverbindungen der genannten Art sind beispielsweise aus der DE 20 2007 009 182 U1 oder der DE 10 2008 027 843 A1 bekannt.

Die genannten Anschlussverbindungen eignen sich in besonderer Weise zum Verbinden eines Wellrohrs (oder eines Wellschlauchs bzw. allgemein eines gewellten, flexiblen Leitungselements) mit dem Anschlussrohrteil eines Solarkollektors. Bei den genannten Solarkollektoren handelt es sich regelmäßig um so genannte OEM-Geräte, die auf der Baustelle oft unter schwierigen Bedingungen (auf dem Dach) ohne bauliche Veränderungen montiert und miteinander verbunden werden müssen. Regelmäßig ist dabei zudem der Verbindungsbereich unter seitlichen Überständen der Solarkollektoren angeordnet und somit für den Monteur nur schwer zugänglich. Hierzu kommt, dass es sich bei den genannten Solarkollektoren um relativ schwere Bauteile handelt, die regelmäßig zwischen 30 und 40 kg pro Stück wiegen und deshalb insbesondere unter den angesprochenen schwierigen Rahmenbedingungen nur bedingt handhabbar sind.

Es besteht somit grundsätzlich Bedarf an einer ohne größeren Aufwand herzustellenden, sicheren und fluiddichten Verbindung zwischen derartigen Bauteilen, die ein Monteur auch unter schwierigen Arbeitsbedingungen ohne Weiteres, das heißt insbesondere ohne spezielles Werkzeug oder ganz ohne Werkzeug schaffen kann. Dabei ist insbesondere zu vermeiden, dass zum Schaffen der genannten Verbindung vorgesehene Verbindungsteile erst vor Ort an den zu verbindenden Elementen angebracht werden müssen, um eine komplizierte Handhabung bzw. sogar einen Verlust derselben zu vermeiden. Insbesondere Kollektorverbinder mit Verschraubungen, Anschlussgewinden, Klammern oder dergleichen sind in diesem Zusammenhang als nachteilig anzusehen, wenn sie überdies auch noch mit zusätzlichen Dichtelementen versehen sind.

Darüber hinaus muss die zu schaffende Anschlussverbindung auch sehr hohen Temperaturen Stand halten und entsprechend robust ausgebildet sein.

Die weiter oben exemplarisch erwähnten druckschriftlich vorbekannten Anschlussvorrichtungen bzw. Anschlussverbindungen aus dem Hause der Anmelderin werden diesen Anforderungen größtenteils gerecht. Es ist dabei jedoch in der Regel erforderlich, beim Anziehen der Verbindung relativ große Anzugsmomente aufzubringen, da zum Herstellen der angestrebten metallischen Dichtung regelmäßig eine substantielle Umformung des Wellrohrs im Bereich seiner endständigen Wellung erfolgt. In bestimmten Situationen können derartige Anzugsmomente überhaupt nur schwer oder nur schwer definiert aufgebracht werden, was eine praktische Verwendbarkeit der vorbekannten Anschlussvorrichtungen einschränken kann. Außerdem ist es aufgrund der vorzunehmenden Umformung in der Regel nicht möglich, eine derartige Anschlussverbindung zu lösen und anschließend erneut fluiddicht wieder herzustellen.

Der Erfindung liegt die Aufgabe zugrunde, eine Anschlussvorrichtung bzw. eine Anschlussverbindung der eingangs genannten bzw. der vorbekannten Art so weiterzuentwickeln, dass sie den vorstehend aufgeführten Anforderungen gerecht wird und dabei nur ein relativ geringes Anzugsmoment zum Schaffen der Verbindung erfordert. Darüber hinaus soll die Anschlussverbindung nach Möglichkeit lösbar und anschließend erneut fluiddicht wieder herstellbar sein.

Die Aufgabe wird erfindungsgemäß gelöst durch eine Anschlussvorrichtung mit den Merkmalen des beigefügten Anspruchs 1 sowie durch eine Anschlussverbindung mit den Merkmalen des beigefügten Anspruchs 12. Vorteilhafte Weiterbildungen der Erfindung sind jeweils Gegenstand von Unteransprüchen, deren Wortlaut hiermit durch ausdrückliche Bezugnahme in die Beschreibung aufgenommen wird, um unnötige Textwiederholungen weitestgehend zu vermeiden.

Erfindungsgemäß umfasst eine Anschlussvorrichtung zum Anschließen eines Wellrohrs, insbesondere an einen Solarkollektor, folgende Bestandteile:
- ein erstes Schraubteil mit einem ersten Gewindeabschnitt und mit einem axialen Durchbruch, welcher Durchbruch zum Aufnehmen und Weiterleiten eines in dem anzuschließenden Wellrohr geführten Fluids ausgebildet ist;
- ein zweites Schraubteil mit einem zweiten Gewindeabschnitt, welcher zu dem ersten Gewindeabschnitt komplementär ausgebildet ist, sodass das erste Schraubteil und das zweite Schraubteil schraubverbindbar sind, und mit einem axialen Durchbruch, welcher Durchbruch zum Durchführen eines anzuschließenden Wellrohrs ausgebildet ist; und
- einen Druckring, der zwischen dem ersten Schraubteil und dem zweiten Schraubteil angeordnet oder anzuordnen ist und der einen Durchbruch aufweist, welcher Durchbruch zum Durchführen eines anzuschließenden Wellrohrs ausgebildet ist;
   wobei
- an dem einen, ersten oder zweiten Schraubteil, vorzugsweise an dessen dem anderen, ersten oder zweiten Schraubteil zugewandter Stirnseite, eine erste Schiebestruktur zum axialen Einwirken auf den Druckring angeordnet ist, durch welche erste Schiebestruktur der Druckring mit einer im Wesentlichen axial wirksamen Kraft beaufschlagbar ist;
- an dem anderen, ersten oder zweiten Schraubteil eine sich zumindest abschnittweise unter einem Winkel schräg zur Längsachse der Anschlussvorrichtung erstreckende Drückstruktur angeordnet ist, welche Drückstruktur zum Einwirken auf eine Außenkontur des Druckrings ausgebildet ist;
- der Druckring eine zur der Drückstruktur zumindest abschnittweise komplementäre Außenkontur und weiterhin eine gegenüber dem restlichen Druckringkörper radial nach innen vorspringende Anlagestruktur aufweist, welche beim Anziehen der Schraubverbindung zwischen erstem und zweitem Schraubteil durch Einwirkung der ersten Schiebestruktur und/oder der Drückstruktur in eine metallisch dichtende Anlage an dem anzuschließenden Wellrohr bringbar ist.

Eine erfindungsgemäße Anschlussverbindung zwischen einem Wellrohr und der erfindungsgemäßen Anschlussvorrichtung zeichnet sich dadurch aus, dass der Druckring durch die erste Schiebestruktur mit einer im Wesentlichen axial wirksamen Kraft beaufschlagt ist, dass die Drückstruktur radial und/oder axial auf die Außenkontur des Druckrings einwirkt und dass der Druckring mit seiner radial nach innen vorspringenden Anlagestruktur durch Einwirkung der ersten Schiebestruktur und/oder der Drückstruktur in eine metallisch dichtende Anlage an dem anzuschließenden Wellrohr gebracht ist. Dabei kann im Zuge einer Verwendung der erfindungsgemäßen Anschlussstruktur gemäß dem beigefügten Anspruch 4 alternativ oder zusätzlich vorgesehen sein, dass der Sicherungsring einer derartigen Anschlussvorrichtung durch die dort vorhandene zweite Schiebestruktur mit einer im Wesentlichen axial wirksamen Kraft beaufschlagt ist und dass der genannte Sicherungsring durch Einwirkung der zweiten Schiebestruktur in eine metallisch dichtende Anlage an dem anzuschließenden Wellrohr gebracht ist.

Erfindungsgemäß wird also weitestgehend auf eine Umformung des Wellrohrs - wie aus dem Stand der Technik bekannt — verzichtet, sondern die Schaffung der gewünschten metallisch dichtenden Anlage zwischen Anschlussvorrichtung einerseits und Wellrohr andererseits erfolgt vorzugsweise dadurch, dass der Druckring mit seiner radial nach innen vorspringenden Anlagestruktur beim Anziehen der Schraubverbindung zwischen dem ersten Schraubteil und dem zweiten Schraubteil durch Druckeinwirkung nach innen in eine metallisch dichtende Anlage an dem anzuschließenden Wellrohr gebracht wird. Somit ist die aus dem Stand der Technik bekannte starke Umformung des Wellrohrs im Anschlussbereich nicht länger erforderlich, was zu deutlich verringerten Anzugsmomenten führt und außerdem unter Umständen sogar eine Lösbarkeit und Erneuerbarkeit der erfindungsgemäßen Anschlussverbindung ermöglicht.

Wie bereits angedeutet, kann die erfindungsgemäße Anschlussvorrichtung im Zuge einer ersten Weiterbildung zusätzlich zu dem Druckring noch einen Sicherungsring aufweisen. Allerdings umfasst die vorliegende Erfindung auch Ausgestaltungen, bei denen der Druckring und der Sicherungsring eine Einheit bilden. Der genannte Sicherungsring kann im Zuge einer Weiterbildung der vorliegenden Erfindung an einer radialen Innenseite des Druckrings angeordnet oder anordenbar sein. Besonders vorteilhaft ist eine Ausgestaltung, wonach der Sicherungsring als Sprengring ausgebildet ist. Im Zuge einer derartigen Ausgestaltung kann der Sicherungsring verliersicher an dem Druckring angeordnet sein, insbesondere wenn Letzterer an seiner radialen Innenseite eine Ausnehmung aufweist, in welcher Ausnehmung der Sicherungsring definiert angeordnet bzw. anzuordnen ist.

Wie weiter oben bereits beschrieben, dient die an dem einen Schraubteil vorgesehene erste Schiebestruktur zum axialen Einwirken auf den Druckring, um diesen mit der Drückstruktur in Wechselwirkung zu bringen, wobei letztere dafür sorgt, dass der Druckring mit seiner radial nach innen vorspringenden Anlagestruktur in dichtende Anlage an dem Wellrohr kommt. Die im Zuge einer anderen Weiterbildung der erfindungsgemäßen Anschlussvorrichtung an dem selben Schraubteil vorzusehende zweite Schiebestruktur dient dagegen zum axialen Einwirken auf den genannten Sicherungsring, welcher durch die genannte zweite Schiebestruktur ebenfalls mit einer im Wesentlichen axial wirksamen Kraft beaufschlagbar ist. Im Zuge der weiter oben angesprochenen Ausgestaltung der erfindungsgemäßen Anschlussvorrichtung mit einer Ausnehmung auf der radialen Innenseite des Druckrings dient die genannte zweite Schiebestruktur insbesondere dazu, den Sicherungsring aus der genannten Ausnehmung heraus axial zu verschieben, um auf diese Weise zur Schaffung einer erfindungsgemäßen Anschlussverbindung beizutragen.

Die genannte zweite Schiebestruktur kann einstückig mit dem betreffenden Schraubteil ausgebildet sein. In der Praxis hat sich jedoch auch eine Ausgestaltung bewährt, bei welcher die zweite Schiebestruktur gegenüber dem betreffenden Schraubteil als separates Bauteil ausgebildet ist, welches beispielsweise die Form einer Zylinderhülse annehmen kann.

Vorteilhafter Weise weist der Druckring an seinem der Drückstruktur an dem betreffenden Schraubteil zugewandten oder zuzuwendenden Ende eine konvex abgerundete Außenkontur auf. Mit dieser Außenkontur tritt der Druckring beim Verschrauben der Anschlussvorrichtung mit der genannten Drückstruktur in Wechselwirkung, welche aufgrund des angesprochenen schrägen Verlaufs bezüglich der Längsachse der Anschlussvorrichtung für die erforderliche radial nach innen gerichtete Dichtwirkung des Druckrings bzw. dessen nach innen vorspringender Anlagestruktur sorgt. Als besonders vorteilhaft hat es sich in diesem Zusammenhang herausgestellt, wenn die Drückstruktur derart ausgebildet ist, dass sie zumindest bereichsweise eine Tangente bzw. Tangentialebene an die genannte Außenkontur des Druckrings bildet. Alternativ ist auch eine zumindest leicht gekrümmt ausgebildete Drückstruktur möglich, wobei ein (lokaler) Krümmungsradius der Drückstruktur betragsmäßig deutlich größer sein kann als ein Krümmungsradius des Druckrings.

Wie weiter oben bereits angesprochen, sieht eine andere Weiterbildung der erfindungsgemäßen Anschlussvorrichtung vor, dass der Druckring als Sprengring ausgebildet ist. Möglich sind in diesem Zusammenhang auch Ausgestaltungen der erfindungsgemäßen Anschlussvorrichtung, bei denen der Druckring und der Sicherungsring in Form eines einzigen kombinierten Bauteils vorliegen, welcher ebenfalls nach Art eines Sprengrings ausgebildet sein kann.

Des Weiteren hat es sich als vorteilhaft herausgestellt, die erfindungsgemäße Anschlussvorrichtung so auszubilden, dass der erste Gewindeabschnitt an dem ersten Schraubteil als Außengewinde und der zweite Gewindeabschnitt an dem zweiten Schraubteil als Innengewinde ausgebildet ist. Allerdings ist die Erfindung keinesfalls auf eine derartige Ausgestaltung beschränkt, so dass umgekehrt auch eine Ausgestaltung des ersten Gewindeabschnitts als Innengewinde und des zweiten Gewindeabschnitts als Außengewinde möglich ist, ohne von dem Grundkonzept der vorliegenden Erfindung abzuweichen. Demnach kommt es maßgeblich lediglich darauf an, dass im Zuge der Verschraubung ein axialer Abstand zwischen den beiden Schraubteilen definiert einstellbar bzw. verringerbar ist. Das Schraubteil mit Innengewinde kann dabei zweckmäßiger Weise nach Art einer Überwurfmutter ausgebildet sein.

Eine wieder andere Weiterbildung der erfindungsgemäßen Anschlussvorrichtung sieht vor, dass an dem betreffenden Schraubteil axial benachbart der Drückstruktur eine rückspringende Struktur, insbesondere in Form einer weiteren Abschrägung, angeordnet ist, welche zum wenigstens teilweisen Aufnehmen eines Wellenberges des Wellrohrs ausgebildet ist. Dabei kann die rückspringende Struktur derart dimensioniert sein, dass es im verschraubten Zustand der Anschlussvorrichtung zu einer im Wesentlichen formschlüssigen Anlage des Wellrohrs in dem Bereich der genannten rückspringenden Struktur kommt. Dadurch kann es in diesem Bereich zur Ausbildung einer (weiteren) metallisch dichtenden Anlage zwischen Wellrohr und Anschlussvorrichtung kommen.

Alternativ kann jedoch auch vorgesehen sein, die genannte rückspringende Struktur in axialer Richtung derart tief auszubilden, dass es aufgrund des so frei gesparten Raums dezidiert zu keiner Anlage des Wellrohrs an der Anschlussvorrichtung in diesem Bereich kommt. Auf diese Weise lässt sich gezielt darauf hinwirken, dass die gewünschte metallisch dichtende Anlage nur im Bereich der radial nach innen vorspringenden Anlagestruktur des Druckrings ausgebildet wird. Bei hinreichend schmaler Ausgestaltung des Druckrings in diesem Bereich ergibt sich so vorteilhafterweise eine Linienanlage zwischen Anschlussvorrichtung bzw. Druckring einerseits und Wellrohr andererseits, was sich positiv auf die erreichbare Dichtigkeit auswirken und zu einer weiteren Reduzierung der erforderlichen Anzugsmomente führen kann, weil sich die Anlagefläche entsprechend verkleinert.

In diesem Zusammenhang sieht eine erste Weiterbildung der erfindungsgemäßen Anschlussverbindung vor, dass das Wellrohr an dem betreffenden Schraubteil der Anschlussvorrichtung im Bereich der genannten rückspringenden Struktur unter Ausbildung einer metallisch dichtenden Anlage im Wesentlichen formschlüssig anliegt. Alternativ kann jedoch — wie bereits ausgeführt — vorgesehen sein, dass die genannte rückspringende Struktur derart tief zum wenigstens teilweisen Aufnehmen eines Wellenberges des Wellrohrs ausgebildet ist, dass das Wellrohr im Bereich der rückspringenden Struktur gerade nicht an dem betreffenden Schraubteil der Anschlussverbindung anliegt, was die weiter oben detailliert besprochenen Vorteile mit sich bringen kann.

Grundsätzlich ist im Rahmen der vorliegenden Erfindung vorgesehen, dass die gewünschte metallisch dichtende Anlage zwischen Anschlussvorrichtung und Wellrohr im Bereich eines Wellenbergs und/oder eines Wellentals und/oder einer Wellenflanke des Wellrohrs ausgebildet ist. In diesem Zusammenhang sei explizit darauf hingewiesen, dass es im Rahmen der vorliegenden Erfindung möglich ist, dass an mehreren der vorstehend genannten Stellen eine metallisch dichtende Anlage zwischen Anschlussvorrichtung und Wellrohr entsteht. Wie auch anhand der nachfolgenden Figurenbeschreibung ersichtlich werden wird, handelt es sich bei der erfindungsgemäßen Anschlussverbindung um ein potentiell redundantes System, welches an mehreren Stellen die Ausbildung einer metallischen Abdichtung ermöglicht, was sich positiv auf die Verwendungssicherheit und Dichtigkeit auswirken kann.

Weitere Eigenschaften und Vorteile der vorliegenden Erfindung ergeben sich aus der nachfolgenden Beschreibung von Ausführungsbeispielen anhand der Zeichnung.
- Figur 1: zeigt im Längsschnitt eine erfindungsgemäße Anschlussvorrichtung mit einem anzuschließenden Wellrohr vor dem Anziehen der Schraubverbindung zur Herstellung einer erfindungsgemäßen Anschlussverbindung;
- Figur 2: zeigt ein Detail einer erfindungsgemäßen Anschlussverbindung etwa gemäß dem Bereich II in Figur 1;
- Figur 3: zeigt ein Detail der Anschlussverbindung gemäß Figur 2;
- Figur 4: zeigt schematisch eine weitere Ausgestaltung einer erfindungsgemäßen Anschlussvorrichtung; und
- Figur 5: illustriert schematisch die Dichtwirkung einer erfindungsgemäßen Anschlussvorrichtung.

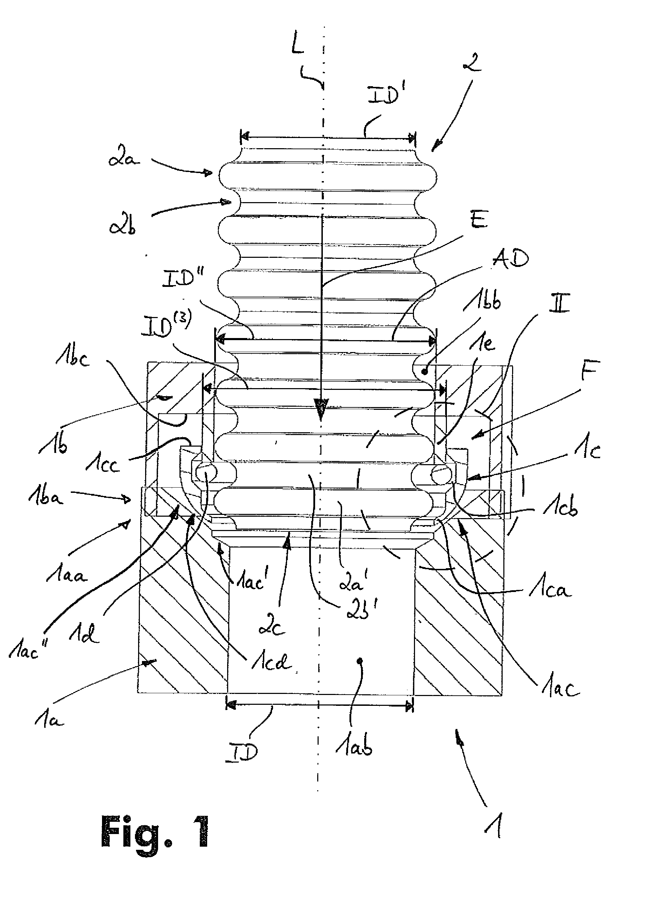

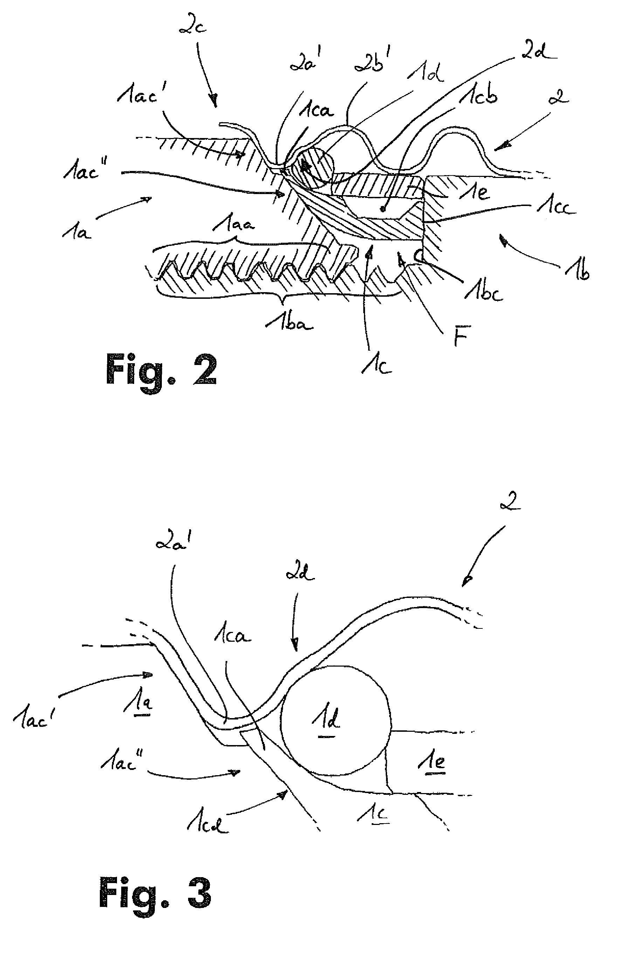

Figur 1 zeigt im Längsschnitt eine bevorzugte Ausgestaltung der erfindungsgemäßen Anschlussvorrichtung, welche hier und in den weiteren Figuren in ihrer Gesamtheit mit dem Bezugszeichen 1 bezeichnet ist. Die Anschlussvorrichtung 1 dient zum Anschließen eines Wellrohrs oder Wellschlauchs 2, d. h. allgemein eines flexiblen metallischen (ring-)gewellten Leitungselements, insbesondere an einen nicht dargestellten Solarkollektor. In der Darstellung gemäß Figur 1 ist das Wellrohr 2 bereits in die Anschlussvorrichtung 1 eingeführt, allerdings ist letztere noch in ihrem "geöffneten" Zustand vor Anziehen der Schraubverbindung gezeigt, so dass gemäß Figur 1 noch keine Anschlussverbindung zwischen Anschlussvorrichtung 1 und Wellrohr 2 geschaffen ist, worauf weiter unten anhand der Figuren 2 und 3 noch genauer eingegangen wird, welche den "geschlossenen" Zustand der Anschlussvorrichtung 1 gemäß Figur 1 darstellen.

Bezugszeichen L gibt die Längsachse der Anschlussvorrichtung 1 bzw. des Wellrohrs 2 an, wobei das Wellrohr 2 in Richtung des Pfeils E und in Richtung der Längsachse L in die Anschlussvorrichtung 1 eingeführt wird. Das Wellrohr 2 weist in an sich bekannter Weise eine regelmäßige Abfolge von Wellenbergen 2a und Wellentälern 2b auf, wobei das Wellrohr 2 an seinem Anschlussende 2c im Bereich eines Wellentals 2b getrennt wurde. Bei dem Wellrohr 2 handelt es sich um ein Wellrohr, welches in einem metallischen Werkstoff ausgebildet ist, vorzugsweise in Edelstahl.

Die Anschlussvorrichtung 1 umfasst ein erstes Schraubteil 1a und ein zweites Schraubteil 1 b, wobei Letzteres als Überwurfmutter ausgebildet ist. Das erste Schraubteil 1 a weist einen ersten Gewindeabschnitt 1 aa auf, welcher vorzugsweise als Außengewinde ausgebildet und nur in Figur 2 explizit dargestellt ist. Entsprechend weist das zweite Schraubteil 1 b einen zweiten Gewindeabschnitt 1ba auf, welcher vorzugsweise als Innengewinde ausgebildet und ebenfalls nur in Figur 2 explizit dargestellt ist. Wie der Fachmann erkennt, kommt es im Rahmen der vorliegenden Erfindung nur darauf an, dass der erste Gewindeabschnitt 1 aa und der zweite Gewindeabschnitt 1ba komplementär ausgebildet sind, so dass das erste Schraubteil 1 a und das zweite Schraubteil 1b schraubverbindbar sind. Grundsätzlich ist es deshalb umgekehrt auch möglich, an dem ersten Schraubteil 1a ein Innengewinde und an dem zweiten Schraubteil 1b ein Außengewinde vorzusehen.

Für die Funktion der beschriebenen Anschlussvorrichtung 1 kommt es letztendlich allein darauf an, dass deren erstes Schraubteil 1 a und deren zweites Schraubteil 1 b in Richtung des in Figur 1 gezeigten Pfeils E ineinander schraubbar bzw. miteinander verschraubbar sind, um den zwischen ihnen verbleibenden Freiraum F in axialer Richtung, das heißt in Richtung der Längsachse L definiert einzustellen bzw. zu verringern.

Weiterhin umfasst das erste Schraubteil 1a einen axialen Durchbruch 1 ab, welcher eine Verlängerung des Wellrohrs 2 in Richtung der Längsachse L darstellt und zum Aufnehmen und Weiterleiten eines in dem anzuschließenden Wellrohr 2 geführten Fluids, vorzugsweise Wasser, ausgebildet ist. Der lichte Durchmesser ID des Durchbruchs 1 ab in dem ersten Schraubteil 1 a entspricht in etwa dem lichten Innendurchmesser ID' des Wellrohrs 2 bzw. liegt geringfügig darüber. Auch das zweite Schreibteil 1 b der Anschlussvorrichtung 1 weist einen axialen Durchbruch 1bb auf, dessen lichter Innendurchmesser ID" derart ausgebildet ist, dass er im wesentlichen gerade dem Außendurchmesser AD des Wellrohrs 2 entspricht, so dass ein anzuschließendes Wellrohr 2 durch den axialen Durchbruch 1 bb des zweiten Schraubteils 1b hindurch in die Anschlussvorrichtung 1 einführbar bzw. durch diese durchführbar ist, wobei das Wellrohr 2 mit seinem Anschlussende 2c grundsätzlich bis in den Durchbruch 1ab des ersten Schraubteils 1a hineinschiebbar ist.

Die Anschlussvorrichtung 1 umfasst weiterhin einen Druckring 1c, welcher gemäß der Darstellung in Figur 1 in dem genannten Freiraum F zwischen dem ersten Schraubteil 1a und dem zweiten Schraubteil 1b angeordnet ist und welcher das eingeführte Wellrohr 2 im Bereich des Anschlussendes 2c radial umgibt. Mit anderen Worten: Ein minimaler lichter Innendurchmesser des Druckrings 1c ist mindestens so groß wie der Außendurchmesser AD des Wellrohrs 2. Obwohl der Druckring 1c grundsätzlich ringförmig ausgebildet ist, weist er zusätzlich eine Reihe struktureller Besonderheiten auf, auf die nachfolgend genauer eingegangen werden soll.

An seinem dem ersten Schraubteil 1a zugewandten Vorderende weist der Druckring 1 c eine gegenüber dem restlichen Druckringkörper radial nach innen vorspringende Anlagestruktur 1ca auf, auf deren Funktion weiter unten noch genauer eingegangen wird. Weiterhin besitzt der Druckring 1c auf seiner Innenseite eine Ausnehmung 1cb, auf deren Funktion ebenfalls weiter unten noch genauer eingegangen wird. An seinem dem zweiten Schraubteil 1b zugewandten Hinterende weist der Druckring 1c einen lichten Innendurchmesser ID⁽³⁾ auf, welcher ein deutliches Übermaß gegenüber dem Außendurchmesser AD des Wellrohrs 2 aufweist.

Innerhalb der genannten Ausnehmung 1 cb des Druckrings 1 c ist ein Sicherungsring 1d in Form eines Sprengrings aufgenommen, so dass der Sprengring 1d sich in seinem geöffneten Zustand befindet, ohne dabei in radialer Richtung bereits an der Innenseite des Druckrings 1c anzuliegen. Der Sicherungsring 1d greift radial einerseits in ein Wellental 2b des Wellrohrs 2 und andererseits in die genannte Ausnehmung 1cb des Druckrings 1c ein und sichert so den Druckring 1 c auf dem Wellrohr 2 im Bereich des Anschlussendes 2c.

In dem zweiten Schraubteil 1b ist eine ebene, quer zur Längsachse L der Anordnung verlaufende Stirnfläche 1bc ausgebildet, mit deren Hilfe das zweite Schraubteil 1 b beim Anziehen der Schraubverbindung auf eine ihm zugewandte hintere Fläche 1cc des Druckrings 1c c axial einwirken kann, worauf weiter unten noch genauer eingegangen wird.

Wie aus Figur 1 weiterhin noch ersichtlich, ist zwischen der genannten Stirnfläche 1bc des zweiten Schraubteils 1b und dem Sicherungsring 1d eine Schiebehülse 1e angeordnet, welche gerade den radialen Spalt zwischen dem Außendurchmesser AD des Wellrohrs 2 und dem lichten Innendurchmesser des Druckrings 1c an dessen Hinterende ausfüllt. Über die genannte Schiebehülse 1e kann das zweite Schraubteil 1b mit seiner Stirnfläche 1bc indirekt in axialer Richtung, das heißt in Richtung der Längsachse L auf den Sicherungsring 1d einwirken, worauf ebenfalls weiter unten noch genauer eingegangen wird.

Wie der Figur 1 weiterhin noch zu entnehmen ist, weist das erste Schraubteil 1a an seinem dem zweiten Schraubteil 1b zugewandten Ende in Erweiterung des Durchbruchs 1ab eine sich im Wesentlichen schräg zur Längsachse L erstreckende doppelt-konische Erweiterung 1ac auf, auf deren genaue Formgebung nachfolgend noch vertieft eingegangen werden soll: Die genannte Erweiterung 1 ac umfasst zunächst eine rückspringende Struktur 1ac', welche zum Aufnehmen etwa eines halben Wellenbergs 2a des Wellrohrs 2 ausgebildet ist. Zu dem Zweck weist die rückspringende Struktur 1ac' zunächst einen schrägen Verlauf auf, welcher in etwa einer mittleren Steigung einer Wellrohrflanke zwischen Wellenberg 2a und Wellental 2b entspricht. Daran schließt sich in axialer Richtung ein parallel zur Längsachse L der Anordnung verlaufender Abschnitt an, wie in Figur 1 zeichnerisch dargestellt, jedoch aus Gründen der Übersichtlichkeit nicht näher bezeichnet. Im Anschluss daran umfasst die Erweiterung 1ac einen weiteren, schräg zur Längsachse L verlaufenden Abschnitt 1ac", welcher vorliegend unter einem anderen Winkel bezüglich der Längsachse L verläuft als der Abschnitt 1 ac'. Der Verlauf des genannten Abschnitts 1 ac" bildet eine Tangente bzw. Tangentialebene an den Verlauf der Außenkontur des Druckrings 1c an dessen Vorderende. Die genannte Außenkontur ist in Figur 1 mit dem Bezugszeichen 1cd bezeichnet und weist eine bezüglich des ersten Schraubteils 1a bzw. dem schrägen Erweiterungsabschnitt 1ac" konvex gekrümmten Verlauf auf. Damit einher geht eine Abnahme des Außendurchmessers des Druckrings 1 c in diesem Bereich, wie in Figur 1 dargestellt.

Im Rahmen der nachfolgenden funktionalen Beschreibung der Anschlussvorrichtung 1 wird die genannte Stirnfläche 1bc des zweiten Schraubteils 1b auch als erste Schiebestruktur und die Hülse 1e auch als zweite Schiebestruktur bezeichnet. In gleicher Weise wird der vorstehend eingehend erläuterte schräge Abschnitt 1ac" des ersten Schraubteils in funktionaler Hinsicht auch als Drückstruktur bezeichnet.

Wie der Fachmann erkennt, ist es in funktionaler Hinsicht keinesfalls erforderlich, dass das zweite Schraubteil 1b und die Hülse 1e als separate Bauteile ausgebildet sind. Vielmehr könnte eine der Hülse 1 e entsprechende zweite Schiebestruktur auch einstückig-integral mit dem zweiten Schraubteil 1b ausgebildet sein.

Beim Zusammenfügen der beschriebenen Anschlussvorrichtung 1 mit dem Wellrohr 2 kann so vorgegangen werden, dass zunächst der Sicherungsring (Sprengring) 1 d innerhalb der Ausnehmung 1 cb des Druckrings angeordnet wird, so dass er dort verliersicher gehalten ist. Anschließend wird die beschriebene Anordnung aus Druckring 1c und Sicherungsring 1 d gemäß Figur 1 mit dem ersten Schraubteil 1a zusammengeführt, und die Hülse 1e wird in den Druckring 1c eingesetzt, so dass sie axial an dem Sicherungsring 1d anliegt, wie gezeigt. Anschließend kann das zweite Schraubteil 1b mit dem ersten Schraubteil 1 a schraubverbunden werden, beispielsweise — gemäß Figur 2 — indem das zweite Schraubteil 1b nach Art einer Überwurfmutter außen auf das erste Schraubteil 1 a aufgeschraubt wird. Die beiden Schraubteile 1 a und 1 b werden dabei nur so weit verschraubt, dass die Anordnung aus Druckring 1c, Sicherungsring 1d und Hülse 1 e innerhalb des zwischen den Schraubteilen 1 a und 1b verbleibenden Freiraums F sicher gehalten ist. Hiermit ist gemeint, dass die in Figur 1 gezeigte relative Anordnung der Bauteile auch bei einem räumlichen Bewegen der Anschlussvorrichtung 1 gewährleistet sein soll. Anschließend kann das Wellrohr 2 in Richtung des Pfeils E in die Anschlussvorrichtung 1 eingeführt werden. Aufgrund der beschriebenen Abmessungen, insbesondere der jeweiligen Innendurchmesser der genannten Bauteile, ist dies problemlos möglich. Dabei kommt es beim Hindurchführen des endständigen Wellenbergs 2a' des Wellrohrs 2 durch den Sicherungsring 1d zu einer geringfügigen radialen Aufweitung des Letzteren, woraufhin dieser anschließend in den Bereich des ersten endständigen Wellentals 2b' des Wellrohrs 2 "einschnappt" und für eine lockere Verriegelung der gesamten beschriebenen Anordnung aus Anschlussvorrichtung 1 und Wellrohr 2 sorgt, welche jedoch durch Zug entgegen der Richtung des Pfeils E jederzeit wieder trennbar ist.

Zum Schaffen einer erfindungsgemäßen Anschlussverbindung zwischen der beschriebenen Anschlussvorrichtung 1 und dem Wellrohr 2 ist es nun erforderlich, den Freiraum F zwischen dem ersten Schraubteil 1 a und dem zweiten Schraubteil 1b durch Verschrauben der genannten Bauteile miteinander in axialer Richtung zu verringern. Dies ist in Figur 2 für den Ausschnitt gemäß Bezugszeichen II In Figur 1 exemplarisch dargestellt, wobei hier wie in allen weiteren Figuren gleiche oder gleich wirkende Elemente mit gleichen Bezugszeichen bezeichnet sind.

Figur 2 zeigt — wie gesagt — ein Detail der Anordnung aus Anschlussvorrichtung 1 und Wellrohr 2 im verschraubten Zustand der Anschlussvorrichtung 1, so dass eine erfindungsgemäße Anschlussverbindung geschaffen ist.

Das zweite Schraubteil 1b hat mit seiner vorderen Stirnfläche (erste Schiebestruktur) 1bc über die Hülse (zweite Schiebestruktur) 1e den Sicherungsring 1d so in axialer Richtung verschoben, dass der Sicherungsring 1d aus der Ausnehmung 1bc heraus in Richtung zu dem ersten Schraubteil 1 a hin verschoben wurde und sich nun in Anlage an der Innenfläche des Druckrings 1c im Bereich von dessen nach innen vorspringender Anlagestruktur 1 ca befindet. Entsprechende Einzelheiten sind auch der vergrößerten Darstellung in Figur 3 zu entnehmen. In diesem Zusammenhang kommt es bei Bezugszeichen 2d zu einer geringfügigen Umformung des Wellrohrs 2 nach innen.

Des Weiteren hat das zweite Schraubteil 1 b mit seiner vorderen Stirnfläche (erste Schiebestruktur) 1bc durch Einwirken auf den Druckring 1 c bei Bezugszeichen 1 cc den Druckring in Richtung des ersten Schraubteils 1 a verlagert, so dass dieser mit seiner konvexen Außenkontur 1 cd im Bereich der Abschrägung 1ac" an dem ersten Schraubteil 1 a anliegt. Letzteres fungiert dabei in dem genannten abgeschrägten Bereich als Drückstruktur, welche(s) den Druckring 1 c mit seiner Anlagenstruktur 1ca radial nach innen drückt, so dass es vorteilhafter Weise zu einer umlaufend dichtenden metallischen Linienanlage zwischen dem Druckring 1c im Bereich der Anlagestruktur 1ca und dem Wellrohr 2 im Bereich des Wellenbergs 2a' kommt, was in Figur 2 oder 3 nicht explizit dargestellt ist. Hier verbleibt noch ein schmaler Spalt zwischen der genannten Anlagestruktur 1ca des Druckrings 1c und dem Wellrohr 2 im Bereich des Wellenbergs 2a'. Das Wellrohr 2a liegt weiterhin mit der endständigen Flanke des genannten Wellenbergs 2a' im Bereich der weiteren Abschrägung 1ac' an dem ersten Schraubteil 1 a an.

Wie Versuche seitens der Anmelderin ergeben haben, ist die in den Figuren 2 und 3 gezeigte Anschlussverbindung trotz der (noch) nicht erreichten metallisch dichtenden Anlage zwischen der Anlagestruktur 1ca des Druckrings 1c und dem Wellrohr 2 zum Einen fluiddicht sowie andererseits — aufgrund der nur geringen Umformung des Wellrohrs 2 bei Bezugszeichen 2d bzw. des Druckrings 1c im Bereich der vorspringenden Anlagestruktur 1ca — wieder lösbar und erneut fluiddicht wieder herstellbar. Offensichtlich kommt es aufgrund der Mehrzahl metallischer Anlagen, beispielsweise zwischen Sicherungsring 1d und Wellrohr 2 im Bereich 2d und/oder zwischen Wellrohr 2 und erstem Schraubteil 1 a im Bereich 1ac' bzw. zwischen Druckring 1 c und erstem Schraubteil 1 a im Bereich 1ac" auch dann insgesamt zu einer metallisch dichtenden Anschlussverbindung, wenn das Wellrohr 2 und der Druckring 1c bei Bezugszeichen 1ca (noch) gar keinen Kontakt haben. Dabei ist aufgrund der geringen zu leistenden Umformarbeit in jedem Fall nur ein relativ kleines Anzugsmoment erforderlich, um die erfindungsgemäße Anschlussverbindung zu schaffen.

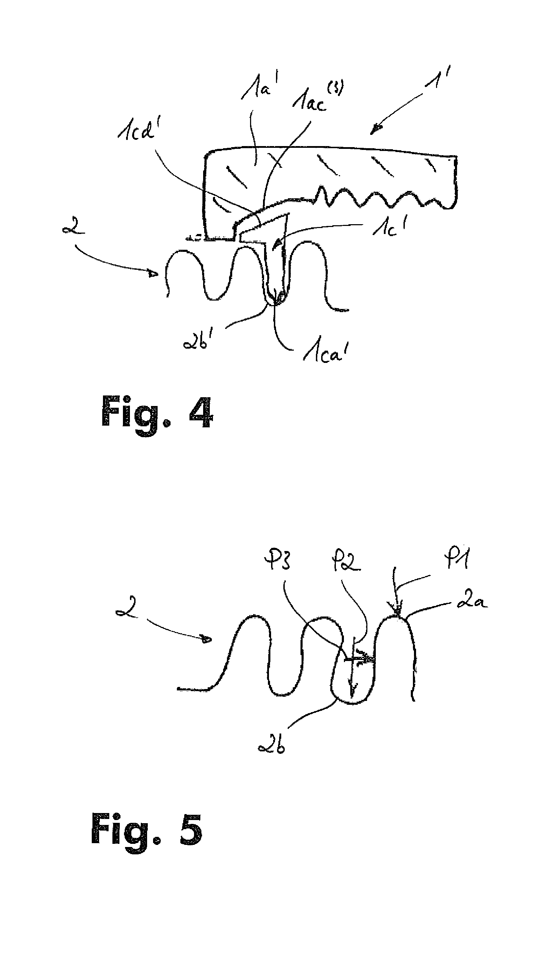

Figur 4 zeigt rein schematisch eine alternative Ausgestaltung der erfindungsgemäßen Anschlussvorrichtung 1' bzw. der erfindungsgemäßen Anschlussverbindung. Figur 4 zeigt bei Bezugszeichen 1a' ein einzelnes Schraubteil, welches einem der in Figur 1 gezeigten Schraubteile 1 a bzw. 1 b entsprechen kann. Bei Bezugszeichen 1c' ist ein kombinierter Druck-/Sicherungsring nach Art eines Sprengrings dargestellt, welcher mit seiner radial nach innen vorspringenden, optimal angespitzten Anlagestruktur 1ca' in das endständige Wellental 2b' eines ebenfalls dargestellten Wellrohrs 2 eingreift. An seiner radialen Außenseite weist der Druck-/Sicherungsring 1c' eine abgeschrägte Formgebung 1 cd' auf, welche funktional der abgerundeten Außenkontur gemäß den Figuren 1 bis 3 entspricht. Das Schraubteil 1a' besitzt auf seiner radialen Innenseite eine Abschrägung 1ac⁽³⁾, welche funktional der Abschrägung 1ac" gemäß den Figuren 1 bis 3 entspricht.

Wie der Fachmann leicht erkennt, kommt es bei einem Anziehen der Schraubverbindung des in Figur 4 gezeigten Schraubteils 1a' mit einem geeignet ausgestalteten, aus Gründen der Übersichtlichkeit in Figur 4 nicht weiter dargestellten weiteren Schraubteil zu einer insbesondere radialen Krafteinwirkung auf den Druck-/Sicherungsring 1 c', welcher mit seiner vorspringenden Anlagestruktur 1ca' im Bereich des Wellentals 2b' für eine metallisch dichtende Anlage an dem Wellrohr 2 zur Schaffung der gewünschten Anschlussverbindung sorgt. Selbstverständlich ist auch im Falle der Ausgestaltung gemäß Figur 4 eine Zweiteilung des Druck-/Sicherungsrings 1c' mit getrenntem Sicherungsring und Druckring möglich, wie weiter oben detailliert erläutert.

Wie dem Fachmann bewusst ist, besitzt das Einwirken auf das Wellrohr 2 im Bereich eines Wellenbergs (Figuren 1 bis 3) oder Wellentals (Figur 4) den Vorteil, dass das Wellrohr 2 in diesen Bereichen eine besonders hohe Stabilität aufweist. Dies ist in Figur 5 mit Hilfe der Pfeile P1 bzw. P2 nochmals symbolisch dargestellt. Mit Hilfe einer geeignet abgeschrägten Drückstruktur (vgl. Bezugszeichen 1ac" in den Figuren 1 bis 3 oder Bezugszeichen 1ac⁽³⁾ in Figur 4) lässt sich mit einem ebenfalls geeignet ausgebildeten Druckring aufgrund der immer vorhandenen axialen Kraftkomponente grundsätzlich auch ein Einwirken auf Flanken des Wellrohrs 2 gemäß dem Pfeil bei Bezugszeichen P3 in Figur 5 erreichen, wobei das Wellrohr 2 jedoch in diesem Bereich eine geringere Stabilität besitzt.

## Patentansprüche

1. Anschlussvorrichtung (1) zum Anschließen eines Wellrohrs (2), insbesondere an einen Solarkollektor, welche Anschlussvorrichtung (1) umfasst:
- ein erstes Schraubteil (1a) mit einem ersten Gewindeabschnitt (1aa) und mit einem axialen Durchbruch (1ab), welcher Durchbruch (1ab) zum Aufnehmen und Weiterleiten eines in dem anzuschließenden Wellrohr (2) geführten Fluids ausgebildet ist;
- ein zweites Schraubteil (1 b) mit einem zweiten Gewindeabschnitt (1ba), welcher zu dem ersten Gewindeabschnitt (1aa) komplementär ausgebildet ist, sodass das erste Schraubteil (1a) und das zweite Schraubteil (1a) schraubverbindbar sind, und mit einem axialen Durchbruch (1 bb), welcher Durchbruch (1 bb) zum Durchführen eines anzuschließenden Wellrohrs (2) ausgebildet ist; und
- einen Druckring (1c), der zwischen dem ersten Schraubteil (1a) und dem zweiten Schraubteil (1b) angeordnet oder anzuordnen ist und der einen Durchbruch aufweist, welcher Durchbruch zum Durchführen eines anzuschließenden Wellrohrs (2) ausgebildet ist;
wobei
- an dem einen, ersten oder zweiten Schraubteil (1 b), vorzugsweise an dessen dem anderen, ersten oder zweiten Schraubteil (1 b) zugewandter Stirnseite, eine erste Schiebestruktur (1bc) zum axialen Einwirken auf den Druckring (1c) angeordnet ist, durch welche erste Schiebestruktur (1bc) der Druckring (1c) mit einer im Wesentlichen axial wirksamen Kraft beaufschlagbar ist;
- an dem anderen, ersten (1a) oder zweiten Schraubteil eine sich zumindest abschnittweise unter einem Winkel schräg zur Längsachse (L) der Anschlussvorrichtung (1) erstreckende Drückstruktur (1ac") angeordnet ist, welche Drückstruktur (1ac") zum Einwirken auf eine Außenkontur (1cd) des Druckrings (1 c) ausgebildet ist;
- der Druckring (1c) eine zur der Drückstruktur (1ac") zumindest abschnittweise komplementäre Außenkontur (1cd) und weiterhin eine gegenüber dem restlichen Druckringkörper radial nach innen vorspringende Anlagestruktur (1ca) aufweist, welche beim Anziehen der Schraubverbindung zwischen erstem (1a) und zweitem Schraubteil (1 b) durch Einwirkung der ersten Schiebestruktur (1bc) und/oder der Drückstruktur (1ac") in eine metallisch dichtende Anlage an dem anzuschließenden Wellrohr (2) bringbar ist.

2. Anschlussvorrichtung (1) nach Anspruch 1, **dadurch gekennzeichnet, dass** an einer radialen Innenseite des Druckrings (1c) ein Sicherungsring (1d) angeordnet oder anordenbar ist.

3. Anschlussvorrichtung (1) nach Anspruch 2, **dadurch gekennzeichnet, dass** der Druckring (1 c) an seiner radialen Innenseite eine Ausnehmung (1cb) aufweist, in welcher Ausnehmung (1cb) der Sicherungsring (1d) angeordnet oder anzuordnen ist, wobei vorzugsweise der Sicherungsring (1 d) als Sprengring ausgebildet ist.

4. Anschlussvorrichtung (1) nach Anspruch 2 oder 3, **dadurch gekennzeichnet, dass** an dem einen, ersten oder zweiten Schraubteil (1b), vorzugsweise an dessen dem anderen, ersten oder zweiten Schraubteil (1 b) zugewandter Stirnseite, eine zweite Schiebestruktur (1e) zum axialen Einwirken auf den Sicherungsring (1d) angeordnet ist, durch welche zweite Schiebestruktur (1e) der Sicherungsring (1d) mit einer im Wesentlichen axial wirksamen Kraft beaufschlagbar ist.

5. Anschlussvorrichtung (1) nach zumindest Anspruch 4, **dadurch gekennzeichnet, dass** die zweite Schiebestruktur (1e) einstückig mit dem einen, ersten oder zweiten Schraubteil (1 b) ausgebildet ist, oder dass die zweite Schiebestruktur (1e) als gegenüber dem einen, ersten oder zweiten Schraubteil (1b) separates Bauteil, vorzugsweise in Form einer Hülse, ausgebildet ist.

6. Anschlussvorrichtung (1) nach mindestens einem der Ansprüche 1 bis 5, **dadurch gekennzeichnet, dass** der Druckring (1 c) an seinem dem anderen, ersten (1a) oder zweiten Schraubteil zugewandten oder zuzuwendenden Ende eine konvex abgerundete Außenkontur (1 cd) aufweist.

7. Anschlussvorrichtung (1) nach mindestens einem der Ansprüche 1 bis 6, **dadurch gekennzeichnet, dass** die Drückstruktur (1ac") an dem anderen, ersten (1a) oder zweiten Schraubteil zumindest bereichsweise in Form einer Tangentialebene an die Außenkontur (1cd) des Druckrings (1c) ausgebildet ist oder dass die Drückstruktur im Querschnitt gekrümmt ausgebildet ist, vorzugsweise mit bezogen auf die Außenkontur (1cd) des Druckrings (1c) relativ großem Krümmungsradius.

8. Anschlussvorrichtung (1) nach mindestens einem der Ansprüche 1 bis 7, **dadurch gekennzeichnet, dass** der Druckring (1c) als Sprengring ausgebildet ist.

9. Anschlussvorrichtung (1) nach mindestens einem der Ansprüche 2 bis 8, **dadurch gekennzeichnet, dass** der Sicherungsring (1d) verliersicher an dem Druckring (1c) gehalten oder anordenbar ist.

10. Anschlussvorrichtung (1) nach mindestens einem der Ansprüche 1 bis 9, **dadurch gekennzeichnet, dass** der erste Gewindeabschnitt (1aa) an dem ersten Schraubteil (1a) als Außengewinde und der zweite Gewindeabschnitt (1ba) an dem zweiten Schraubteil (1 b) als Innengewinde () ausgebildet ist, oder umgekehrt.

11. Anschlussvorrichtung (1) nach mindestens einem der Ansprüche 1 bis 10, **dadurch gekennzeichnet, dass** an dem anderen, ersten (1a) oder zweiten Schraubteil benachbart der Drückstruktur (1ac") eine rückspringende Struktur (1ac') angeordnet ist, welche zum wenigstens teilweisen Aufnehmen eines Wellenberges (2a') des Wellrohrs (2) ausgebildet ist.

12. Anschlussverbindung zwischen einem Wellrohr (2) und der Anschlussvorrichtung (1) nach einem der vorhergehenden Ansprüche 1 bis 11, wobei
- der Druckring (1c) durch die erste Schiebestruktur (1bc) mit einer im Wesentlichen axial wirksamen Kraft beaufschlagt ist;
- die Drückstruktur (1ac") radial und/oder axial auf die Außenkontur (1cd) des Druckrings (1 c) einwirkt;
- der Druckring (1 c) mit seiner radial nach innen vorspringende Anlagestruktur (1ca) durch Einwirkung der ersten Schiebestruktur (1bc) und/oder der Drückstruktur (1ac") in eine metallisch dichtende Anlage an dem anzuschließenden Wellrohr (2) gebracht ist;
und/oder wobei nach Anspruch 4
- der Sicherungsring (1d) durch die zweite Schiebestruktur (1e) mit einer im Wesentlichen axial wirksamen Kraft beaufschlagt ist;
- der Sicherungsring (1d) durch Einwirkung der zweiten Schiebestruktur (1e) in eine metallisch dichtende Anlage an dem anzuschließenden Wellrohr (2) gebracht ist.

13. Anschlussverbindung nach Anspruch 12, wobei das Wellrohr (2) an dem anderen, ersten (1a) oder zweiten Schraubteil der Anschlussvorrichtung (1) im Bereich der rückspringenden Struktur (1ac') gemäß Anspruch 11 unter Ausbildung einer metallisch dichtenden Anlage anliegt.

14. Anschlussverbindung nach Anspruch 13, **dadurch gekennzeichnet, dass** die rückspringende Struktur (1ac') gemäß Anspruch 11 derart tief zum wenigstens teilweisen Aufnehmen eines Wellenberges (2a') des Wellrohrs (2) ausgebildet ist, dass das Wellrohr (2) im Bereich der rückspringenden Struktur (1ac') nicht dem anderen, ersten oder zweiten Schraubteil der Anschlussvorrichtung (1) anliegt.

15. Anschlussverbindung nach mindestens einem der Ansprüche 12 bis 14, **dadurch gekennzeichnet, dass** die metallisch dichtende Anlage im Bereich eines Wellenbergs (2a') und/oder eines Wellentals (2b') und/oder einer Wellenflanke des Wellrohrs (2) ausgebildet ist.
